(19) Europäisches Patentamt
European Patent Office
Office européen des brevets

(11) EP 0 360 746 B1

(12) # EUROPEAN PATENT SPECIFICATION

(45) Date of publication and mention of the grant of the patent: **17.07.1996 Bulletin 1996/29**

(51) Int. Cl.[6]: **C08F 2/38**, C08F 8/44, C02F 5/00

(21) Application number: **89810680.2**

(22) Date of filing: **12.09.1989**

(54) **Phosphonic compounds**

Phosphonverbindungen

Composés phosphoniques

(84) Designated Contracting States:
**BE DE FR GB IT NL**

(30) Priority: **21.09.1988 GB 8822150**

(43) Date of publication of application:
**28.03.1990 Bulletin 1990/13**

(73) Proprietor: **FMC CORPORATION (UK) LIMITED**
**Manchester M17 1WT (GB)**

(72) Inventor: **Cook, Barry, Dr.**
**Manchester M31 2AY Lancashire (GB)**

(74) Representative: **Hamilton, Raymond**
**FMC Corporation (UK) Limited**
**Process Additives Division**
**Tenax Road**
**Trafford Park**
**Manchester M17 1WT (GB)**

(56) References cited:
**EP-A- 0 038 764**
**EP-A- 0 150 706**
**DE-A- 3 101 939**
**GB-A- 976 365**
**GB-A- 1 089 700**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

The present invention relates to new phosphonic cotelomers, to their production and to their use in the treatment of water.

The majority of natural waters, and aqueous systems in general, contain dissolved salts of metals such as calcium, magnesium, barium and strontium. When the water or aqueous system is subjected to heating, the dissolved salts may be converted to insoluble salts and deposited as scale on heat transfer surfaces in contact with the water or aqueous system. If the water or aqueous system is concentrated even without heating, insoluble salts may also be precipitated.

Salt precipitation and scale deposition are troublesome and can cause increased costs in maintaining aqueous systems in good working order. Among the problems caused by scale deposits are obstruction of fluid flow, impedance of heat transfer, wear of metal parts, shortening of equipment life, localised corrosion attack, poor corrosion inhibitor performance, and unscheduled equipment shutdown. These problems can arise in water or oil wells, water pipes, steam power plants, water desalination plants, reverse osmosis equipment utilising aqueous solutions, heat exchange equipment, and equipment concerned with the transport of products and by-products in aqueous media (e.g. fly ash formed during the combustion of coal in the production of electricity). The range of temperature over which these processes operate is wide, for example ambient temperatures are used for cooling water and elevated temperatures are used for steam power plants.

One method used to overcome the disadvantages associated with scale formation has involved the dismantling of equipment to enable the accumulated deposits to be cleaned out. This procedure is costly and does not prevent scale redeposition.

Another method involves the use of strong alkali solution for the removal of, in particular, sulphate scale. It has been alleged that under suitable conditions of temperature and time the alkali treatment eventually provides an initial break up of the scale, which can then be removed by mechanical means. Such a method requires considerable time, and the removal of scale subsequent to treatment is often difficult.

There is therefore a need in this field for a composition which can be added to water or aqueous systems in very small quantities and which can cut down the rate at which insoluble salts are precipitated over a wide temperature range and also disperse those insoluble salts which are precipitated. Furthermore when any scale is formed, it should desirably be easily removeable from surfaces by simple mechanical means.

A number of additives have been proposed for addition to water or aqueous systems for these purposes, among the certain polyphosphates and polycarboxylic acids.

The polyphosphates have the advantage that they ultimately give a soft friable scale which is easily removed from surfaces, whereas the use of certain polycarboxylic acids, e.g. polyacrylic acids is disadvantageous in that there results a hard adherent eggshell-like scale.

However, where water-treatment processes involving heat are used, the temperatures are increasing, and since polyphosphate additives are readily hydrolysed at high temperature and as a result can give rise to the precipitation of insoluble calcium orthophosphate and other calcium phosphates, their usefulness is consequently limited.

Moreover, there are a substantial number of commercial plants e.g. industrial boilers, cooling water systems, gas-scrubbing plants, slurry devices e.g china clay slurry devices, in which it is important to maintain, in a suspended or dispersed state, various solid materials which are found in waters used in said plants. If such solids cease to be suspended in the liquid, fouling of equipment may occur, e.g. in so-called "once-through" cooling systems. If there is a plentiful supply of water in close proximity to an industrial plant, cooling is often accomplished by passing the water through heat transfer equipment and then discharging the water back to its source. However, it is not feasible, from an economic standpoint, to filter the water conventionally due to the large quantities of water that are employed in this system. For this reason, formation of deposits readily occurs, within the plant, and it is normally necessary to stop the operation periodically for cleaning purposes. Moreover, corrosion of the plant leads to the deposition of iron oxides and/or iron salts, which, if not carefully controlled, leads to blockage and mechanical failure of the plant.

Another problem area is the accumulation of silt and mud which collects in the bottoms of water storage tanks and ballast tanks of vessels and ships, thereby impairing the economy of maintenance and operation of the vessel.

A still further problem associated with undesired depositions from aqueous systems on to metal surfaces in contact with the systems, occurs during the sealing of anodically produced oxide layers on aluminium. During such sealing, using hot or boiling water, not only are the pores of the oxide layers sealed, but also a thick velvety coating (sealing smut) is formed over the whole surface. There is a need for an improved means for inhibiting the formation of this sealing smut.

With respect to the problem of inhibiting corrosion of metal surfaces in contact with aqueous systems, known corrosion inhibitors traditionally contain metals such as chromium or zinc; phosphorus as phosphate, polyphosphate or phosphonate; or sodium nitrite. Most of the known inhibitor types are now believed to have an adverse effect on the environment when the treated aqueous system is ultimately discharged into natural waters, e.g. due to their inherent toxicity and/or to their tendency to promote biological growth.

In European Patent Specification 0150706 there are described cotelomer compounds having the formula:

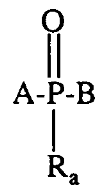

and salts thereof wherein A is a random polymeric residue comprising at least one unit of formula

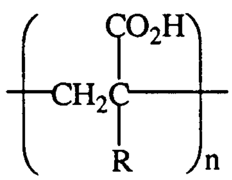

and at least one unit of formula, different from the above unit

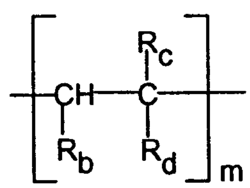

and B is hydrogen or a residue A;
Wherein m and n are integers such that the sum of m+n is a integer of from 3 to 100, the ratio of n:m being from 99 to 1:1 to 99, provided that the resulting telomers are water-soluble and wherein m and/or n in a residue A may be the same as or different from m and/or n in a residue B; R is hydrogen, methyl or ethyl; $R_a$ is a residue -OX, wherein X is hydrogen, an alkali- or alkaline earth metal, ammonium or an amine residue; $R_b$ is a hydrogen, methyl or a residue $-CO_2R_e$, wherein $R_e$ is hydrogen or a straight- or branched chain alkyl residue having 1 to 8 carbon atoms optionally substituted by a hydroxy group;
$R_c$ is hydrogen, a straight- or branched chain alkyl residue having 1 to 4 carbon atoms, hydroxymethyl or a residue -$CO_2R_f$, wherein $R_f$ is hydrogen, a residue of formula

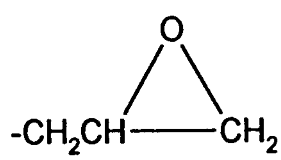

a residue of formula $-[CH_2CH(R_g)O]_zH$, in which $R_g$ is hydrogen, methyl or phenyl and z is an integer from 1 to 20, or $R_f$ is a straight- or branched chain alkyl residue having 1 to 8 carbon atoms and optionally substituted by a hydroxy group or by a group $SO_3M$ in which M is hydrogen or an alkali- or alkaline earth metal atom;
$R_d$ is a residue $-CO_2R_e$ (wherein $R_e$ has its previous significance), a straight- or branched alkyl residue having 1 to 8 carbon atoms optionally substituted by one or two carboxylic acid groups, a phenyl residue, an acetyl residue, hydroxymethyl, an acetomethyl residue, $-SO_3M$, $-CH_2SO_3M$ or $-PO_3M_2$, in which M is hydrogen or an alkali metal or alkaline earth metal atom, a residue $-CONR_hR_i$, wherein $R_h$ and $R_i$ are the same or different and each is hydrogen, a straight- or branched chain alkyl residue having 1 to 8 carbon atoms, hydroxymethyl or a residue $-CH(OH)CO_2M$, -

$C(CH_3)_2CH_2SO_3M$ or $-C(CH_3)_2CH_2PO_3M_2$, wherein M has its previous significance, or $-N(R_j)COCH_3$, in which $R_j$ is hydrogen or $C_1$-$C_4$ straight or branched chain alkyl group.

These known cotelomer compounds are useful as corrosion and/or scale inhibitors in aqueous systems, as agents for facilitating dispersion of particulate matter in aqueous systems and as sealing smut inhibitors in processes for sealing anodically produced oxide layers on aluminium surfaces.

GB 1572406 discloses phosphono adipates and their use as additives to aqueous media in order to inhibit the formation of scale to reduce the corrosion of ferrous metal surface in contact with the aqueous media and to disperse inorganic materials present in the aqueous medium.

We have now found certain new cotelomer compounds which hae excellent corrosion inhibition and scale inhibition properties in aqueous systems, in particular improved performance in inhibiting the deposition of calcium carbonate scale relative to the performance of the cotelomers of EP 0150706.

Accordingly, the present invention provides cotelomer compounds having the formula I:

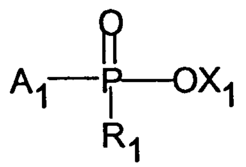 I

and salts thereof wherein $A_1$ is a random polymeric residue comprising at least one unit of formula II:

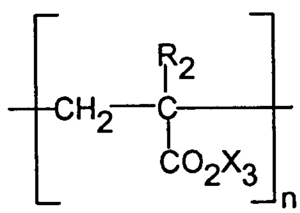 II

and at least one unit which differs from a unit of formula II and which has the formula III:

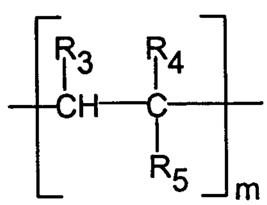 III

$X_1$ is hydrogen, $C_1$-$C_4$ alkyl, phenyl, an alkali metal- or alkaline earth metal atom, a ammonium ion or an amine residue;
m and n are integers such that the sum of m and n is an integer of from 2 to 100, the ratio n:m being from 99 to 1:1 to 99, provided that the resulting cotelomer is water-soluble;
$R_1$ is $-OX_2$ wherein $X_2$ may be the same as or different from $X_1$ and is hydrogen, $C_1$-$C_4$ alkyl, phenyl, an alkali metal- or an equivalent of an alkaline earth metal atom, or an ammonium or a amine residue, or $X_1$ and $X_2$ together may be a multivalent metal atom forming a neutral complex with anionic moieties of the cotelomer molecule, or $X_1$ and $X_2$ may be linked by a $-CH_2$-$CH_2$- residue to form a ring structure;
$R_2$ is hydrogen, or methyl;
$X_3$ is the same as or different from $X_1$ and $X_2$, and is hydrogen, $C_1$-$C_4$ alkyl, an alkali metal- or an equivalent of an alkaline earth metal atom, or an ammonium or an amine residue;
$R_3$ is hydrogen, or a residue $-CO_2R_6$ wherein $R_6$ is hydrogen or a straight- or branched chain $C_1$-$C_8$ alkyl residue;
$R_4$ is hydrogen or a residue $-CO_2R_6$ wherein $R_6$ is hydrogen, or a straight or branched chain $C_1$-$C_8$ alkyl residue;
$R_5$ is a residue $-CO_2R_7$ in which $R_7$ is hydrogen, a straight or branched $C_1$-$C_8$ alkyl residue, a straight or branched $C_1$-

$C_8$ alkyl residue substituted by one or two carboxylic acid groups, or is a phenyl residue, a phenyl residue substituted by hydroxyl or $SO_3X_4$, or is an hydroxyl, acetomethyl, $-SO_3X_4$, or $-PO_3(X_4)_2$ in which $X_4$ is hydrogen, an alkali metal or a equivalent alkaline earth metal, a residue $-CONR_9R_{10}$ in which $R_9$ and $R_{10}$ are the same or different and each is hydrogen, a straight- or branched chain $C_1$-$C_8$ alkyl, hydroxymethyl, or a residue $-CH(OH)CO_2X_4$, $-C(CH_3)_2CH_2SO_3X_4$, $-C(CH_3)_2CH_2CO_2X_4$ or $-C(CH_3)_2CH_2PO_3(X_4)_2$ in which $X_4$ has its previous significance, or $-N(R_{11})COCH_3$ in which $R_{11}$ is hydrogen or straight- or branched $C_1$-$C_4$ alkyl, or $R_5$ with $R_3$ may form a carboxylic anhydride moiety -CO.O.CO-.

Preferred are cotelomer compounds having the formula I wherein the sum of m and n is an integer of from 2 to 40.

Salts of the cotelomeric compounds of formula I are compounds in which some or all of the acidic hydrogens in acidic compounds of formula I have been replaced by alkali metal ions, ammonium ions, organic bases or quaternized amine radicals. These salts also exhibit good activity in inhibiting precipitation of insoluble salts from aqueous solution.

$C_1$-$C_4$ Alkyl residues $X_1$, $X_2$, $X_3$, $R_4$ and $R_{11}$ are eg, methyl, ethyl, n-propyl, isopropyl and n-butyl residues.

Carboxy-$C_1$-$C_4$ alkyl residues $R_2$ are eg, carboxymethyl, carboxyethyl, carboxypropyl and carboxybutyl.

$C_1$-$C_8$ Alkyl residues $R_5$, $R_6$. $R_7$. $R_9$ and $R_{10}$ are eg, methyl, ethyl, n-propyl, isopropyl, n-butyl, n-pentyl, n-hexyl and n-oxtyl residues.

Hydroxy-substituted $C_1$-$C_8$ alkyl residues $R_6$ or $R_7$ are eg, hydroxymethyl, 2-hydroxyethyl, 2- or 3-hydroxypropyl, 2- or 4-hydroxybutyl, 2- or 6-hydroxyhexyl, and 2- or 8-hydroxyoctyl; carboxyl-substituted $C_1$-$C_8$ alkyl residues, $R_5$ include carboxymethyl, carboxyethyl, carboxypropyl or 1,1-dicarboxymethyl.

Alkali metal atoms $X_1$, $X_2$, $X_3$, $X_4$, $R_{12}$ and $R_{13}$ are, particularly, sodium or potassium atoms; and alkaline earth metal atoms $X_1$, $X_2$, $X_3$, $X_4$, $R_{12}$ and $R_{13}$ are, especially equivalents of calcium, barium and strontium atoms. Amine residues $X_1$, $X_2$, $X_3$, $X_4$, $R_{12}$ and $R_{13}$ are eg, ammonium, $-NH(CH_3)_3$, $-NH(C_2H_5)_3$, or $-NH(CH_2CH_2OH)_3$.

Multivalent metal atoms formed by $X_1$ and $X_2$ or $R_{12}$ and $R_{13}$ together include calcium$^{II}$, barium$^{II}$, zinc$^{II}$, copper$^{II}$, iron$^{II}$, and iron$^{III}$.

Preferably, $R_2$ is hydrogen or methyl.

Preferably $R_1$ is a residue $-OX_2$ wherein $X_2$ has its previous significance but is preferably a alkali metal atom, especially sodium.

In order to improve the hydrolytic stability of the cotelomers of formula I, it is particularly preferred that $R_3$ and $R_4$ are each hydrogen or carboxyl; and that $R_5$ is carboxyl, $C_1$-$C_8$ alkyl, $C_1$-$C_8$ alkyl substituted by one or two carboxyl groups, or $R_5$ is phenyl or is phenyl substituted by hydroxyl or $SO_3X_4$, or is hydroxyl, acetomethyl, $-SO_3X_4$ or $-PO_3(X_4)_2$ in which $X_4$ has its previous significance, $-CONR_9R_{10}$ wherein $R_9$ and $R_{10}$ have their previous significance or $N(R_{11})COCH_3$ in which $R_{11}$ has its previous significance: viz cotelomers of formula I are preferred which are free of readily-hydrolyzable ester groups.

The preferred ratio of m:n ranges from 92:8 to 8:92.

Examples of bases with which the cotelomers of formula I may be reacted to form partial or complete salts thereof, are the hydroxides and carbonates of sodium, potassium and ammonia. Similarly, organic bases may be employed e.g. primary, secondary and tertiary alkyl amines and substituted alkyl amines in which the total carbon number does not exceed 12, e.g. triethanolamine. Similarly, quaternized amine radicals may be employed e.g. radicals having the formula:

$$^{\oplus}N(R_{1'}R_{2'}R_{3'}R_{4'})_4\ An^{\ominus}$$

wherein $R_{1'}$ to $R_{4'}$ are the same or different and each is $C_1$-$C_6$ alkyl, especially methyl or ethyl, or 2-hydroxyethyl; or one of $R_{1'}$ to $R_{4'}$ is benzyl and the other three of $R_{1'}$ to $R_{4'}$ is $C_1$-$C_6$ alkyl, especially methyl or ethyl; and $An^{\ominus}$ is halogen, especially chlorine or bromine, hydroxyl or sulphate.

According to the present invention, there is also provided a process for the production of cotelomer compounds of formula I, comprising reaction n moles of a compound having the formula IV:

$$CH_2=C(R_2)CO_2R_{11} \qquad IV$$

wherein $R_2$ and $R_{11}$ have their previous significance;
m moles of a compound having the formula V:

$$CH(R_3)=C(R_4)(R_5) \qquad V$$

wherein $R_3$, $R_4$ and $R_5$ have their previous significance; and one mole of a compound having the formula VI:

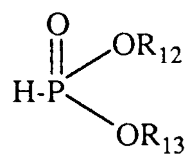

VI

wherein $R_{12}$ and $R_{13}$, independently, are hydrogen, $C_1$-$C_4$ alkyl, phenyl, an alkali metal-or an equivalent of an alkaline earth metal atom, an ammonium ion or an amine residue or $R_{12}$ and $R_{13}$ together may be a multivalent metal atom or $R_{12}$ and $R_{13}$ may be linked, via a $-CH_2CH_2-$ residue, to form a cyclic ring structure.

Typical metal ions $R_{12}$ and $R_{13}$ and amine residue and an ammonium ion are those indicated hereinbefore in relation to $X_1$ and $X_2$.

The definitions of $R_{12}$ and $R_{13}$ in reactant of formula VI determines the definition of $X_1$ and $X_2$ in the produce of formula I.

Typical co-reactants of formula VI include dimethylphosphite, diethylphosphite, diphenylphosphite, orthophosphorous acid or salts thereof, in particular alkali metal salts, especially sodium salts.

Examples of co-monomers of formula IV or V include:
acrylamide, N-hydroxymethylacrylamide, N,N-dimethylacrylamide, N-vinyl-N-methylacetamide, N-allylacetamide, N-acrylamidoglycollic acid, methacrylic acid, methyl methacrylate, ethyl acrylate, 2-hydroxyethyl methacrylate, 2-hydroxypropyl methacrylate, 2-hydroxyethyl acrylate, 2-hydroxypropyl acrylate, maleic acid, maleic anhydride, 2-carboxyethyl acrylate, 3-buten-1,2,3-tri-carboxylic acid, dimethyl maleate, diethyl maleate, diethyl fumarate, itaconic acid, dimethyl itaconate, vinyl sulphonic acid, allyl sulphonic acid, 4-styrene sulfonic acid, sodium- or potassium salts of 3-sulphopropyl acrylic acid, 2-acrylamido-2-methyl-propane sulphonic acid, vinyl phosphonic acid, styrene phosphonic acid, allyl alcohol, allyl acetate, vinyl acetate, styrene, $\alpha$-methyl styrene, hexene, octene, N-acrylamidopropane sulphonic acid, glycidyl methacrylate, crotonic acid, ethyl crotonate, polyethylene glycol esters and polypropylene glycol esters of (meth)acrylic acids.

Alternatively a salt of the compound of formula V may be employed in which the acidic hydrogens have been partially or completely replaced by cations derived from the salt forming based hereinbefore described.

The reaction is carried out in the presence or absence of a solvent inert under the reaction conditions and in the presence of a reaction initiator as described in US 2,957,931. Suitable reaction initiators include materials which decompose under the reaction conditions to yield free radicals. Examples of such materials are bisazoisobutyronitrile, organic peroxides such as benzoyl peroxide, methylethyl ketone peroxide, ditertiary butyl peroxide and monobutyl hydroperoxide; and oxidising agents such as hydrogen peroxide, sodium perborate and sodium persulphate.

The products of this process are obtained as solutions. They may be subjected to partial or complete evaporation under reduced pressure. The unpurified reaction products may be used as the cotelomeric products in the method of the invention. The reaction products may also be purified. The purification procedure may be:

i) by evaporation of reaction solvent, dissolving the residue in water, washing with a water immiscible organic solvent e.g. ether and evaporation of the aqueous solution,
ii) by evaporation of reaction solvent, dissolving the residue in a suitable solvent, e.g. methanol, and reprecipitation by addition of a non-solvent e.g. ether.

The process for the production of cotelomer compounds of formula I may include a conventional hydrolysis step in order to convert any carboxylic- and/or phosphonic acid ester groups, wholly or partly, into the corresponding free acid groups, subsequent to the polymerisation step.

If desired, any acid groups so obtained may be converted, by conventional methods, into the corresponding salt groups.

Salts of the compounds of formula I in which some or all of the acidic hydrogens in the compounds of formula I have been replaced by the cations derived from the salt forming bases hereinbefore defined, may be prepared by mixing an aqueous or alcoholic solution of the compound of formula I with an aqueous or alcoholic solution containing an amount of the requisite base in excess of, equal to or less than the stoichiometric requirement. The solvent may then be removed by evaporation. In many of the water-containing systems where inhibitors of this invention would prove useful, the water is sufficiently alkaline to effect neutralisation and only the product of the invention need be added.

The present invention also provides a method of treating an aqueous system comprising adding to the system a cotelomer compound of formula I or a salt thereof.

In practice, the amount of the compound of formula I, or a salt thereof, used to treat the aqueous system may vary according to the protective function which the compound is required to perform.

For example, for corrosion-inhibiting protective treatments, optionally with simultaneous scale-inhibiting treatments, the amount of the compound of formula I, or a salt thereof, added to the aqueous system may range from 0.1 to 50'000 ppm (0.00001 to 5 % by weight), preferably from 1 to 500 ppm (0.0001 to 0.05 % by weight), based on the weight of the aqueous system.

For solely anti-scale treatments, the amount of the compound of formula I, or a salt thereof, added is conveniently from 1 to 200, preferably 1 to 30 ppm, based on the aqueous system.

For most relatively dilute aqueous dispersions to be treated, the amount of compound of formula I, or a salt thereof, to be added as dispersant/antifoulant is conveniently from 1 to 200 ppm, preferably 2 to 20 ppm by weight. Aqueous slurries to be treated, however, may require much higher levels of compound of formula I, or a salt thereof, e.g. from 0.1 to 5 % by weight on total solids - which can be as high as 70 % by weight of the total aqueous system.

When used to inhibit to deposition of scale and the precipitation of salts from aqueous solutions, the compounds of formula I, or salts thereof, are particularly effective in inhibiting deposition of scale-forming salts derived from calcium, magnesium, barium or strontium cations, and anions such as sulphate, carbonate, hydroxide, phosphate and silicate.

With respect to aqueous system which may be treated according to the present invention, of particular interest with respect to combined corrosion inhibition and anti-scale treatments are cooling water system, steam generating systems, sea-water evaporators, reverse osmosis equipment, paper manufacturing equipment, sugar evaporator equipment, soil irrigation systems, hydrostatic cookers, gas scrubbing systems, closed circuit heating systems, aqueous-based refrigeration systems and down-well systems; for corrosion inhibition treatments alone, aqueous systems of particular interest include aqueous machining fluid formulations (e.g. for use in boring, milling, reaming, broaching, drawings, spinning, turning, cutting, sawing, grinding, and thread-cutting operations or in non-cutting shaping in drawing or rolling operations) aqueous scouring systems, engine coolants including aqueous glycol antifreeze systems, water/glycol hydraulic fluids; and aqueous based polymer surface-coating systems/or solvent-based polymer systems, e.g. those containing tetrahydrofuran, ketones or alkoxyalkanols.

The inhibitor compound of formula I used according to the invention may be used alone, or in conjunction with other compounds known to be useful in the treatment of aqueous systems.

In the treatment of systems which are completely aqueous, such as cooling water systems, air-conditioning systems, steam-generating systems, sea-water evaporator systems, hydrostatic cookers, and closed circuit heating or refrigerant systems, further corrosion inhibitors may be used such as, for example, water soluble zinc salts; phosphates; polyphosphates; phosphonic acids and their salts, for example, hydroxyethyl diphosphonic acid (HEDP), nitrilotris methylene phosphonic acid and methylamino dimethylene phosphonocarboxylic acids and their salts, for example, those described in German Offenlegungsschrift 2632774, hydroxyphosphonoacetic acid, 2-phosphonobutane-1,2,4-tricarboxylic acid and those disclosed in GB 1572406; nitrates, for example, sodium nitrate; nitrites, e.g. sodium nitrite; molybdates, e.g. sodium molybdate, tungstates; silicates; e.g. sodium silicate; benzotriazole, bis-benzotriazole or copper deactivating benzotriazole or tolutriazole derivatives or their Mannich base derivatives; mercaptobenzotriazole; N-acyl sarcosines; N-acylimino diacetic acids; ethanolamines; fatty amines; and polycarboxylic acids, for example, polymaleic acid and polyacrylic acid, as well as their respective alkali metal salts, copolymers of maleic anhydride, e.g. copolymers of maleic anhydride and sulfonated styrene, copolymers of acrylic acid, e.g. copolymers of acrylic acid and hydroxyalkylated acrylic acid, and substituted derivatives of polymaleic and polyacrylic acids and their copolymers. Moreover, in such completely aqueous systems, the inhibitor used according to the invention may be used in conjunction with dispersing and/or threshold agents, e.g. polymerised acrylic acid (or its salts), phosphino-polycarboxylic acids (as described and claiming in British Patent 1458235), the cotelomeric compounds described in European Patent Application No. 0150706, hydrolysed polyacrylonitrile, polymerised methacrylic acid and its salts, polyacrylamide and copolymers thereof from acrylic and methacrylic acids, lignin sulphonic acid and its salts, tannin, naphthalene sulphonic acid/formaldehyde condensation products, starch and its derivatives, cellulose, acrylic acid/lower alkyl hydroxy-acrylate copolymers, e.g. those described in US Patent Specification No. 4029577, styrene/maleic anhydride copolymers and sulfonated styrene homopolymers, e.g. those described in US Patent Specification No. 4374733 and combinations thereof. Specific threshold agents, such as for example 2-phosphonobutane-1,2,4-tricarboxylic acid (PBSAM), hydroxyethyl diphosphonic acid (HEDP), hydrolysed polymaleic anhydride and its salts, alkyl phosphonic acids, hydroxyphosphonoacetic acid, 1-aminoalkyl-1,1-diphosphonic acids and their salts, and alkali metal polyphosphates, may also be used.

Particularly interesting additive packages are those comprising compounds of formula I with one or more of polymaleic acid or polyacrylic acid or their copolymers, or substituted copolymers, hydroxyphosphonoacetic acid, HEDP, PBSAM, triazoles such as tolutriazole, molybdates and nitrites.

Precipitating agents such as alkali metal orthophosphates, carbonates; oxygen scavengers such as alkali metal sulphites and hydrazines; sequestering agents such as nitrilotriacetic acid and its salts; antifoaming agents such as silicones, e.g. polydimethylsiloxanes, distearylsebacamide, distearyl adipamide and related products derived from ethylene oxide and/or propylene oxide condensations, in addition to fatty alcohols, such as capryl alcohols and their ethylene oxide condensates; and biocides, e.g amines, quaternary ammonium compounds, chlorophenols, sulphur-containing compounds such as sulphones, methylene bis thiocyanates and carbamates, isothiazolones, brominated

propionamides, triazines, phosphonium compounds, chlorine and chlorine-release agents and organometallic compounds such as tributyl tin oxide, may be used.

If the system to be treated by the method of the invention is not completely aqueous, e.g. an aqueous machining fluid formulation, it may be e.g. a water dilutable cutting or grinding fluid.

The aqueous machining fluid formulations of the invention may be, e.g. metal working formulations. By "metal working", we mean reaming, broaching, drawing, spinning, cutting, grinding, boring, milling, turning, sawing, non-cutting, shaping or rolling. Examples of water-dilutable cutting or grinding fluids into which the corrosion inhibiting combination may be incorporated include:

a) aqueous concentrates of one or more corrosion inhibitors, and optionally one or more anti-wear additives, used at dilutions of 1:50 to 1:100, which are usually employed as grinding fluids;
b) polyglycols containing biocides, corrosion inhibitors and anti-wear additives which are used at dilutions of 1:20 to 1:40 for cutting operations and 1:60 to 1:80 grinding;
c) semi-synthetic cutting fluids similar to (b) but containing in addition 10 to 25 % oil with sufficient emulsifier to render the water diluted product translucent;
d) an emulsifiable mineral oil concentrate containing, for example, emulsifiers, corrosion inhibitors, extreme pressure/anti-wear additives, biocides, anti-foaming agents, coupling agents etc.; they are generally diluted from 1:10 to 1:50 with water to a white opaque emulsion;
e) a product similar (d) containing less oil and more emulsifier which on dilution to the range 1:50 to 1:100 gives a translucent emulsion for cutting or grinding operations.

For those partly-aqueous systems in which the aqueous system component is an aqueous machining fluid formulation the inhibitor of formula I used according to the invention may be used singly, or in admixture with other additives, e.g. known further corrosion inhibitors and/or extreme-pressure additives.

Examples of other corrosion inhibitors which may be used in these aqueous systems, in addition to the inhibitor composition used according to the invention, include the following groups:

a) Organic acids, their esters or ammonium, amine, alkanolamine and metal salts, for example, benzoic acid, p-tert-butyl benzoic acid, disodium sebacate, triethanolamine laurate, isononanoic acid, triethanolamine salt of (p-toluene sulphonamido caproic acid), triethanolamine salt of benzene sulphonamido caproic acid, triethanolamine salts of 5-ketocarboxylic acid derivatives as described in European Patent No. 41927, sodium N lauroyl sarcosinate or nonyl phenoxy acetic acid;
b) Nitrogen containing materials such as the following types: fatty acid alkanolamides; imidazolines, for example 1-hydroxyethyl-2-oleyl-imidazolines, oxazolines; triazoles for example benzotriazoles; or their Mannich base derivatives, triethanolamines; fatty amines; inorganic salts, for example, sodium nitrate; and the carboxy-triazine compounds described in European Patent Application No. 46139;
c) Phosphorus containing materials such as the following types: amine phosphates, phosphonic acids or inorganic salts, for example, sodium dihydrogen phosphate or zinc phosphate;
d) Sulphur containing compounds such as the following types: sodium, calcium or barium petroleum sulphonates, or heterocyclics, for example, sodium mercaptobenzothiazole.

Nitrogen containing materials, particularly triethanolamine, are preferred.

Examples of extreme pressure additives which may be present in the systems treated according to the present invention include sulphur and/or phosphorus and/or halogen containing materials, for instance, sulphurised sperm oil, sulphurised fats, tritolyl phosphate, chlorinated paraffins or ethoxylated phosphate esters.

When triethanolamine is present in the aqueous systems treated according to the present invention, it is preferably present in an amount such that the ratio of inhibitor composition to triethanolamine is from 2:1 to 1:20.

The partly-aqueous systems treated by the method of the present invention may also be aqueous surface-coating compositions, e.g. emulsion paints and aqueous powder coatings for metallic substrates.

The aqueous surface- coating composition may be, e.g. a paint such as a styrene-acrylic copolymer emulsion paint, a resin, latex, or other aqueous based polymer surface-coating systems, to coat a metal substrate. The inhibitor composition used according to the invention may be employed to prevent flash rusting of the metal substrate during application of the surface coating and to prevent subsequent corrosion during use of the coated metal.

In aqueous surface-coating compositions treated by the method of the invention the inhibitor composition may be used singly, or in admixture with other additives, e.g. known corrosion inhibitors, biocides, emulsifiers and/or pigments.

The further known corrosion inhibitors which may be used are, e.g. those of classes a), b), c) and d) hereinbefore defined.

Examples of biocides which may be used in these aqueous systems, in addition to the compound of formula I, include the following:

Phenols, and alkyl- and halogenated phenols, for example, pentachlorophenol, o-phenylphenol, o-phenoxyphenol and chlorinated o-phenoxyphenol, and salicylanilides, diamines, triazines and organometallic compounds such as organomercury compounds and organotin compounds.

Examples of pigments which may be used in these aqueous systems, in addition to the compound of formula I, include titanium dioxide, zinc chromate, iron oxide and organic pigments such as the phtalocyanines.

As already indicated tri-cotelomers of formula I also function as dispersing agents and/or antifoulants towards common deposits, e.g. iron oxides and/or iron salts, calcium and magnesium deposits, e.g. their carbonates, sulphates, oxalates and phosphates, and silt, alumina, silicates and clays found in such waters.

In particular, the method of the present invention may be applied to disperse deposits in an aqueous system containing 5 to 1500 ppm by weight of calcium ion as well as suspended solids. This aspect of the present invention finds particular use in the china clay industry in which it is important to obtain slurries which will not appreciably separate out during transportation from the clay pits to the user. At high concentrations of suspended solids in these slurries, the cotelomers of formula I have been found to disperse china clay and to be of value as "in process" dispersants and as grinding aids.

The following Examples further illustrate the present invention. All parts and percentages are given by weight, unless stated otherwise.

Example 1: 27.6 Parts by weight of di-ethylphosphite are heated with stirring at 120°C under an atmosphere of nitrogen gas. To this are added, simultaneously over 4 hours, 7.3 parts by weight of di-t-butyl peroxide and a mixture of 60 parts by weight ethyl acrylate and 17.2 parts by weight vinyl acetate. The heating is maintained for a further 2 hours after the additions had ceased.

The resulting liquid is washed with 100 parts by weight of water and the organic fraction subjected to distillation under reduced pressure to remove volatiles at 200°C/1600 Pa. The residual liquid is then dissolved in 200 parts by weight of 18 % hydrochloric acid and heated to reflux for 16 hours. Subsequent removal of the aqueous portion by distillation at 100°C and 1200 Pa gives 45 parts by weight of a pale yellow solid polymer. Incorporation of phosphonic acid is shown by broad absorbances at around 30 ppm in the $^{31}P$ nmr spectrum.

Example 2: Calcium carbonate (cooling water) threshold test

| Test Conditions | |
|---|---|
| Test temperature | 70°C |
| Test duration | 30 minutes |
| Aeration rate | 500 cc/min (per 100 ml) |
| Calcium | 150 ppm as $Ca^{2+}$ |
| Magnesium | 45 ppm as $Mg^{2+}$ |
| Carbonate | 51 ppm as $CO_3^{2-}$ |
| Bicarbonate | 269 ppm as $^{-}HCO_3$ |
| Test additive | 1 ppm |

The test is designed to assess the ability of an additive to inhibit the precipitation of $CaCO_3$. The water composition simulates cooling water and the high temperature represents the conditions which exist close to a heat exchanger. Air bubbling is used to increase the severity of the test conditions.

A volume of solution containing sodium carbonate and sodium bicarbonate is mixed with an equal volume of a solution containing calcium chloride and magnesium chloride which already contains the test additive. The resulting test solution, through which air is bubbled at a constant rate, is stored at 70°C for 30 minutes. After this time, the solution is filtered and the calcium remaining in the filtrate is determined by EDTA titration.

Each test is carried out in duplicate, and the first test is a standard test which determines the actual $Ca^{2+}$ concentration in the test.

$$\%\ CaCO_3\ \text{inhibition} = \frac{\text{titre of test-titre of blank}}{\text{titre of standard-titre of blank}} \times 100$$

The standard and blank titres are usually 15-16 ml and 5-6 ml, respectively.

The product of Example 1, at 1 ppm level of addition, gave a % $CaCO_3$ inhibition of 52.

## Claims

**1.** Cotelomer compounds having the formula I:

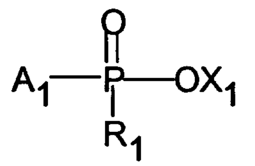

I

and salts there of wherein $A_1$ is a random polymeric residue comprising at least one unit of formula II:

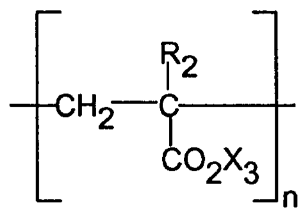

II

and at least one unit which differs from a unit of formula II and which has the formula III:

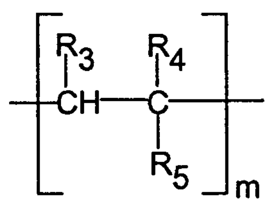

III

$X_1$ is hydrogen, $C_1$-$C_4$ alkyl, phenyl, an alkali metal- or alkaline earth metal atom, a ammonium ion or an amine residue;
m and n are integers such that the sum of m and n is an integer of from 2 to 100, the ratio n:m being from 99 to 1:1 to 99, provided that the resulting cotelomer is water-soluble;
$R_1$ is $-OX_2$ wherein $X_2$ may be the same as or different from $X_1$ and is hydrogen, $C_1$-$C_4$ alkyl, phenyl, an alkali metal- or an equivalent of an alkaline earth metal atom, or an ammonium or an amine residue, or $X_1$ and $X_2$ together may be a multivalent metal atom forming a neutral complex with anionic moieties of the cotelomer molecule, or $X_1$ and $X_2$ may be linked by a $-CH_2$-$CH_2$- residue to form a ring structure;
$R_2$ is hydrogen, or methyl;
$X_3$ is the same as or different from $X_1$ and $X_2$ and is hydrogen, $C_1$-$C_4$ alkyl, an alkali metal- or an equivalent of an alkaline earth metal atom, or an ammonium or an amine residue;
$R_3$ is hydrogen, or a residue $-CO_2R_6$ wherein $R_6$ is hydrogen or a straight- or branched chain $C_1$-$C_8$ alkyl residue;
$R_4$ is hydrogen or a residue $-CO_2R_6$ wherein $R_6$ is hydrogen,
$R_5$ is a residue $-CO_2R_7$ in which $R_7$ is hydrogen, a straight or branched $C_1$-$C_8$ alkyl residue, a straight or branched $C_1$-$C_8$ alkyl residue substituted by one or two carboxylic acid groups, or is a phenyl residue, a phenyl residue substituted by hydroxyl or $SO_3X_4$, or is an hydroxyl, acetomethyl, $-SO_3X_4$, or $-PO_3(X_4)_2$ in which $X_4$ is hydrogen, an alkali metal or an equivalent alkaline earth metal, a residue $-CONR_9R_{10}$ in which $R_9$ and $R_{10}$ are the same or different and each is hydrogen, a straight- or branched chain $C_1$-$C_8$ alkyl, hydroxymethyl, or a residue $-CH(OH)CO_2X_4$, $-C(CH_3)_2CH_2SO_3X_4$, $-C(CH_3)_2CH_2CO_2X_4$ or $-C(CH_3)_2CH_2PO_3(X_4)_2$ in which $X_4$ has its previous significance, or $-N(R_{11})COCH_3$ in which $R_{11}$ is hydrogen or straight- or branched $C_1$-$C_4$ alkyl, or $R_5$ with $R_3$ may form a carboxylic anhydride moiety -CO.O.CO-.

2. Cotelomer compounds of formula I according to claim 1 wherein $R_1$ is a residue $-OX_2$ wherein $X_2$ is as defined in claim 1.

3. Cotelomer compounds of formula I according to claim 2 wherein $X_2$ is an alkali metal atom.

4. Cotelomer compounds of formula I according to claim 3 wherein the alkali metal atom is sodium.

5. Cotelomers of formula I according to claim 1 which are free of readily-hydrolyzable ester groups.

6. Process for the production of cotelomer compounds of formula I according to claim 1, comprising reacting n moles of an acid having the formula IV:

$$CH_2=C(R_2)CO_2R_{11} \qquad IV$$

wherein $R_2$ is as defined in claim 1 and $R_{11}$ is as defined in claim 1; m moles of a compound having the formula V:

$$CH(R_3)=C(R_4)(R_5) \qquad V$$

wherein $R_3$, $R_4$ and $R_5$ are as defined in claim 1; and one mole of a compound having the formula VI:

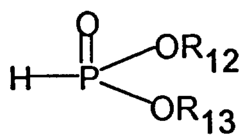

VI

wherein $R_{12}$ and $R_{13}$, independently, are hydrogen, $C_1$-$C_4$ alkyl, phenyl, an alkali metal- or an equivalent of an alkaline earth metal atom, an ammonium ion or an amine residue or $R_{12}$ and $R_{13}$ together may be a multivalent metal atom or $R_{12}$ and $R_{13}$ are linked, via a $-CH_2CH_2-$ residue, to form a cyclic structure.

7. Process according to claim 6 wherein $R_1$ is a residue $-OX_2$ in which $X_2$ is an alkali metal.

8. Process according to claim 9 wherein $X_2$ is sodium.

9. Method of treating an aqueous system comprising adding to the system a cotelomer compound of formula I according to claim 1, or a salt thereof.

10. Method according to claim 9 wherein the aqueous system is treated to inhibit corrosion of metal in contact with the system and the cotelomer compound of formula I, or a salt thereof, is added in amount of 0.1 to 50'000 ppm.

11. Method according to claim 10 wherein the cotelomer of formula I, or a salt thereof, is added in amount of 1 to 200 ppm.

12. Method according to claim 9, wherein the aqueous system is treated to inhibit the deposition of scale from it, and the cotelomer compound of formula I, or a salt thereof, is added in amount of 1 to 200 ppm.

13. Method according to claim 12 wherein the amount of cotelomer of formula I added is 1 to 30 ppm.

14. Cotelomer compounds of formula I according to claim 1 wherein the sum of m and n is an integer of from 2 to 40.

**Patentansprüche**

1. Cotelomerverbindungen der Formel I:

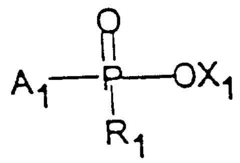

I

und deren Salze, wobei $A_1$ ein willkürlicher Polymerrest mit mindestens einer Einheit der Formel II:

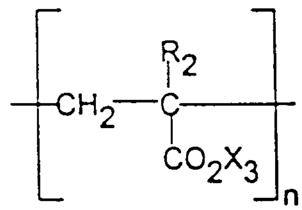

II

und mindestens einer von einer Einheit der Formel II verschiedenen Einheit der Formel III ist:

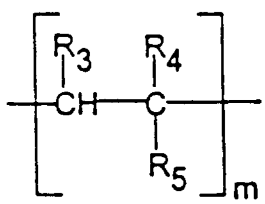

III

,

wobei $X_1$ ein Wasserstoffatom, einen $C_1$-$C_4$-Alkyl- oder Phenylrest, ein Alkalimetall- oder Erdalkalimetallatom, ein Ammoniumion oder einen Aminrest darstellt;
m und n ganze Zahlen darstellen, wobei die Summe von m und n eine ganze Zahl zwischen 2 und 100 ist und das Verhältnis n:m zwischen 99:1 und 1:99 ist, mit der Maßgabe, daß das so erhaltene Cotelomer wasserlöslich ist;
$R_1$ einen Rest -$OX_2$ darstellt, wobei $X_2$ gleich oder verschieden von $X_1$ sein kann und ein Wasserstoffatom, einen $C_1$-$C_4$-Alkyl- oder Phenylrest, ein Alkalimetallatom oder ein Äquivalent eines Erdalkalimetallatoms, oder einen Ammonium- oder Aminrest darstellt, oder $X_1$ und $X_2$ zusammen ein mehrwertiges Metallatom sein können, das mit anionischen Gruppen des Cotelomermoleküls einen neutralen Komplex bildet, oder $X_1$ und $X_2$ durch einen -$CH_2$-$CH_2$-Rest zu einer Ringstruktur verbunden sein können;
$R_2$ ein Wasserstoffatom oder eine Methylgruppe darstellt;
$X_3$ gleich oder verschieden von $X_1$ und $X_2$ ist und ein Wasserstoffatom, einen $C_1$-$C_4$-Alkylrest, ein Alkalimetallatom oder ein Äquivalent eines Erdalkalimetallatoms, oder einen Ammonium- oder Aminrest darstellt;
$R_3$ ein Wasserstoffatom oder einen Rest -$CO_2R_6$ darstellt, wobei $R_6$ ein Wasserstoffatom oder ein geradkettiger oder verzweigter $C_1$-$C_8$-Alkylrest ist;
$R_4$ ein Wasserstoffatom oder einen Rest -$CO_2R_6$ darstellt, wobei $R_6$ ein Wasserstoffatom ist,
$R_5$ einen Rest -$CO_2R_7$ darstellt, wobei $R_7$ ein Wasserstoffatom, ein geradkettiger oder verzweigter $C_1$-$C_8$-Alkylrest, ein mit einer oder zwei Carbonsäuregruppen substituierter geradkettiger oder verzweigter $C_1$-$C_8$-Alkylrest, oder ein Phenylrest, ein mit Hydroxyl oder $SO_3X_4$ substituierter Phenylrest, oder ein Hydroxyl-, Acetomethyl-, -$SO_3X_4$- Rest, oder ein Rest -$PO_3(X_4)_2$ ist, wobei $X_4$ ein Wasserstoffatom, ein Alkalimetall oder ein äquivalentes Erdalkalimetall ist, ein Rest -$CONR_9R_{10}$, wobei $R_9$ und $R_{10}$ gleich oder verschieden sein können und jeweils ein Wasserstoffatom, ein geradkettiger oder verzweigter $C_1$-$C_8$-Alkylrest, ein Hydroxymethylrest oder ein Rest -$CH(OH)CO_2X_4$, -$C(CH_3)_2CH_2SO_3X_4$, - $C(CH_3)_2CH_2CO_3X_4$ oder -$C(CH_3)_2CH_2PO_3(X_4)_2$ sind, wobei
$X_4$ wie vorstehend beschrieben ist oder -$N(R_{11})COCH_3$ darstellt, wobei $R_{11}$ ein Wasserstoffatom oder ein geradkettiger oder verzweigter $C_1$-$C_4$-Alkylrest ist oder $R_5$ mit $R_3$ einen Carboxyl-Anhydridrest -CO.O.CO- bilden kann.

**2.** Cotelomerverbindungen der Formel I nach Anspruch 1, wobei $R_1$ einen Rest $-OX_2$ darstellt, wobei $X_2$ wie in Anspruch 1 definiert ist.

**3.** Cotelomerverbindungen der Formel I nach Anspruch 2, wobei $X_2$ ein Alkalimetallatom ist.

**4.** Cotelomerverbindungen der Formel I nach Anspruch 3, wobei das Alkalimetallatom Natrium ist.

**5.** Cotelomere der Formel I nach Anspruch 1, die keine leicht hydrolysierbaren Estergruppen enthalten.

**6.** Verfahren zur Herstellung von Cotelomerverbindungen der Formel I nach Anspruch 1, umfassend das Umsetzen von n Mol einer Säure der Formel IV:

$$CH_2{=}C(R_2)CO_2R_{11} \qquad IV,$$

wobei $R_2$ und $R_{11}$ wie in Anspruch 1 definiert sind; m Mol einer Verbindung der Formel V:

$$CH(R_3){=}C(R_4)(R_5) \qquad V,$$

wobei $R_3$, $R_4$ und $R_5$ wie in Anspruch 1 definiert sind; und ein Mol einer Verbindung der Formel VI:

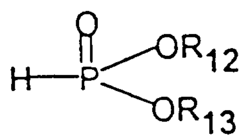

VI)

wobei $R_{12}$ und $R_{13}$ unabhängig voneinander ein Wasserstoffatom, einen $C_1$-$C_4$-Alkyl- oder Phenylrest, ein Alkalimetallatom oder ein Äquivalent eines Erdalkalimetallatoms, ein Ammoniumion oder einen Aminrest darstellen oder $R_{12}$ und $R_{13}$ zusammen ein mehrwertiges Metallatom sein können oder $R_{12}$ und $R_{13}$ durch einen $-CH_2CH_2-$Rest zu einer ringförmigen Struktur verbunden sind.

**7.** Verfahren nach Anspruch 6, wobei $R_1$ einen Rest $OX_2$ darstellt, wobei $X_2$ ein Alkalimetall ist.

**8.** Verfahren nach Anspruch 7, wobei $X_2$ Natrium ist.

**9.** Verfahren zum Behandeln eines wäßrigen Systems, umfassend die Zugabe einer Cotelomerverbindung der Formel I nach Anspruch 1, oder eines Salzes davon, zu dem System.

**10.** Verfahren nach Anspruch 9, wobei das wäßrige System zum Hemmen der Korrosion von Metall bei Kontakt mit dem System behandelt wird und die Cotelomerverbindung der Formel I, oder ein Salz davon, in einer Menge von 0,1 bis 50.000 ppm zugegeben wird.

**11.** Verfahren nach Anspruch 10, wobei die Cotelomerverbindung der Formel I, oder ein Salz davon, in einer Menge von 1 bis 200 ppm zugegeben wird.

**12.** Verfahren nach Anspruch 9, wobei das wäßrige System zum Hemmen von Kesselsteinablagerungen aus dem System behandelt wird und die Cotelomerverbindung der Formel I, oder ein Salz davon in einer Menge von 1 bis 200 ppm zugegeben wird.

**13.** Verfahren nach Anspruch 12, wobei die Cotelomerverbindung der Formel I in einer Menge von 1 bis 30 ppm zugegeben wird.

**14.** Cotelomerverbindungen der Formel I nach Anspruch 1, wobei die Summe von m und n eine ganze Zahl zwischen 2 und 40 ist.

## Revendications

**1.** Composés cotélomères ayant la formule I :

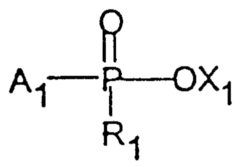

I

et les sels de ceux-ci dans lesquels $A_1$ est un résidu polymère aléatoire comprenant au moins un motif de formule II :

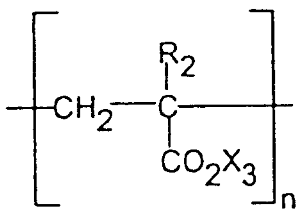

II

et au moins un motif qui diffère d'un motif de formule II et qui a la formule III :

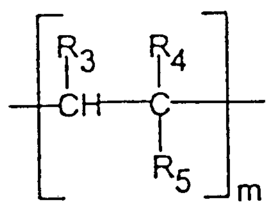

III

$X_1$ est l'hydrogène, un alkyle en $C_1$-$C_4$, un phényle, un atome de métal alcalin ou de métal alcalino-terreux, un ion ammonium ou un groupe amine;
m et n sont des entiers tels que la somme m et n soit un entier de 2 à 100, le rapport n:m étant de 99 à 1:1 à 99, sous réserve que le cotélomère qui en résulte soit soluble dans l'eau;
$R_1$ est $-OX_2$, où $X_2$ peut être identique ou différent de $X_1$ et est l'hydrogène, un alkyle en $C_1$-$C_4$, un phényle, un atome de métal alcalin ou un équivalent d'un atome de métal alcalino-terreux, ou un radical ammonium ou amine, ou $X_1$ et $X_2$ peuvent ensemble être un atome de métal multivalent formant un complexe neutre avec des parties anioniques de la molécule de cotélomère, ou $X_1$ et $X_2$ peuvent être liés par un radical $-CH_2$-$CH_2$- pour former une structure cyclique;
$R_2$ est l'hydrogène ou le méthyle;
$X_3$ est identique ou différent de $X_1$ et $X_2$ et est l'hydrogène, un alkyle en $C_1$-$C_4$, un atome de métal alcalin ou un équivalent d'un atome de métal alcalinoterreux, ou un radical ammonium ou amine;
$R_3$ est l'hydrogène, ou un radical $-CO_2R_6$ dans lequel $R_6$ est l'hydrogène ou un radical alkyle en $C_1$-$C_8$ à chaîne droite ou ramifiée;
$R_4$ est l'hydrogène ou un radical $-CO_2R_6$ dans lequel $R_6$ est l'hydrogène;
$R_5$ est un radical $-CO_2R_7$ dans lequel $R_7$ est l'hydrogène, un radical alkyle en $C_1$-$C_8$ à chaîne droite ou ramifiée, un radical alkyle en $C_1$-$C_8$ à chaîne droite ou ramifiée substitué par un ou deux groupes acides carboxyliques, ou est un radical phényle, un radical phényle substitué par un hydroxyle ou $SO_3X_4$, ou est un hydroxyle, un acétométhyle, $-SO_3X_4$, ou $-PO_3(X_4)_2$, où $X_4$ est l'hydrogène, un métal alcalin ou un métal alcalino-terreux équivalent, un radical $-CONR_9R_{10}$ dans lequel $R_9$ et $R_{10}$ sont identiques ou différents et sont chacun l'hydrogène, un alkyle en $C_1$-$C_8$ à chaîne droite ou ramifiée, un hydroxyméthyle, ou un radical $-CH(OH)CO_2X_4$, $-C(CH_3)_2CH_2SO_3X_4$, $-C(CH_3)_2CH_2CO_2X_4$ ou $-C(CH_3)_2CH_2PO_3(X_4)_2$ dans lequel $X_4$ a la signification précédente, ou $-N(R_{11})COCH_3$

dans lequel $R_{11}$ est l'hydrogène ou un alkyle en $C_1$-$C_4$ à chaîne droite ou ramifiée, ou $R_5$ avec $R_3$ peuvent former une partie anhydride carboxylique -CO.O.CO-.

2. Composés cotélomères de formule I selon la revendication 1, dans lesquels $R_1$ est un radical $-OX_2$ dans lequel $X_2$ est tel que défini dans la revendication 1.

3. Composés cotélomères de formule I selon la revendication 2, dans lesquels $X_2$ est un atome de métal alcalin.

4. Composés cotélomères de formule I selon la revendication 3, dans lesquels l'atome de métal alcalin est le sodium.

5. Cotélomères de formule I, qui sont exempts de groupes esters facilement hydrolysables.

6. Procédé de production de composés cotélomères de formule I selon la revendication 1, comprenant la réaction de n moles d'un acide ayant la formule IV :

$$CH_2=C(R_2)CO_2R_{11} \qquad IV$$

dans laquelle $R_2$ est tel que défini dans la revendication 1 et $R_{11}$ est tel que défini dans la revendication 1; de m moles d'un composé ayant la formule V :

$$CH(R_3)=C(R_4)(R_5) \qquad V$$

où $R_3$, $R_4$ et $R_5$ sont tels que définis dans la revendication 1; et une mole d'un composé ayant la formule VI :

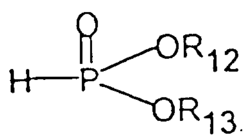

VI

dans laquelle $R_{12}$ et $R_{13}$ sont, indépendamment, l'hydrogène, un alkyle en $C_1$-$C_4$, un phényle, un atome de métal alcalin ou un équivalent d'un atome de métal alcalino-terreux, un ion ammonium ou un radical amine, ou $R_{12}$ et $R_{13}$ peuvent ensemble être un atome de métal multivalent ou $R_{12}$ et $R_{13}$ sont liés, par l'intermédiaire d'un radical $-CH_2CH_2-$, pour former une structure cyclique.

7. Procédé selon la revendication 6, dans lequel $R_1$ est un radical $-OX_2$ dans lequel $X_2$ est un métal alcalin.

8. Procédé selon la revendication 9, dans lequel $X_2$ est le sodium.

9. Procédé de traitement d'un système aqueux comprenant l'addition au système d'un composé cotélomère de formule I selon la revendication 1, ou d'un sel de celui-ci.

10. Procédé selon la revendication 9, dans lequel le système aqueux est traité pour inhiber la corrosion d'un métal en contact avec le système, et dans lequel le composé cotélomère de formule I, ou un sel de celui-ci, est ajouté dans une proportion de 0,1 à 50000 ppm.

11. Procédé selon la revendication 10, dans lequel le cotélomère de formule I, ou un sel de celui-ci, est ajouté dans une proportion de 1 à 200 ppm.

12. Procédé selon la revendication 9, dans lequel le système aqueux est traité pour inhiber le dépôt de tartre provenant de celui-ci, et dans lequel le composé cotélomère de formule I, ou un sel de celui-ci, est ajouté dans une proportion de 1 à 200 ppm.

13. Procédé selon la revendication 12, dans lequel la proportion de cotélomère de formule I ajoutée est de 1 à 30 ppm.

14. Composés cotélomères de formule I selon la revendication 1, dans lesquels la somme de m et n est un entier de 2 à 40.